Europäisches Patentamt

European Patent Office

Office européen des brevets

(19)

(11) Veröffentlichungsnummer: **0 086 463**
**B1**

(12) **EUROPÄISCHE PATENTSCHRIFT**

(45) Veröffentlichungstag der Patentschrift:
**07.01.87**

(51) Int. Cl.⁴: **H 04 B 3/14**

(21) Anmeldenummer: **83101289.3**

(22) Anmeldetag: **10.02.83**

(54) Laufzeitentzerrer für Geräte der elektrischen Nachrichtentechnik.

(30) Priorität: **12.02.82 DE 3204899**

(43) Veröffentlichungstag der Anmeldung:
**24.08.83 Patentblatt 83/34**

(45) Bekanntmachung des Hinweises auf die Patenterteilung:
**07.01.87 Patentblatt 87/2**

(84) Benannte Vertragsstaaten:
**AT DE NL SE**

(56) Entgegenhaltungen:
**DE - A - 2 039 417**
**DE - B - 1 297 154**
**FR - A - 2 407 609**

(73) Patentinhaber: **Siemens Aktiengesellschaft Berlin und München, Wittelsbacherplatz 2, D-8000 München 2 (DE)**

(72) Erfinder: **Ulmer, Wolfgang, Dipl.-Ing., Grünstrasse 9, D-8000 München 70 (DE)**
Erfinder: **Kucera, Walter, Anton Baumgartnerstrasse 44/B5/202, A-1232 Wien (AT)**

## Beschreibung

Die Erfindung bezieht sich auf einen Laufzeitentzerrer für Geräte der elektrischen Nachrichtentechnik, dessen Laufzeitabhängigkeit von der Frequenz einstellbar ist, bestehend aus zwischen jeweils zwei Verstärkerstufen einschaltbaren Allpässen aus wenigstens einem überbrückten T-Glied mit einem mittenangezapften Übertrager im Längszweig, dessen einstellbare Hauptinduktivität durch eine ihn überbrückende einstellbare Kapazität zu einem Parallelresonanzkreis ergänzt ist, parallel zu der die Serienschaltung aus einer Kapazitätsdiode und einem weiteren kapazitiven Element geschaltet ist.

Bei Richtfunksystemen werden Laufzeitverzerrungen im wesentlichen durch die RF-Filter, ZF-Filter und die Reflektionen der Nachbarkanäle verursacht. Da diese letzteren Laufzeitverzerrungen von der Reihenfolge der Filter an der Kanalweiche abhängig sind, kommt es, abhängig vom RF-Kanal, zu eventuell stark unterschiedlichen Laufzeitverzerrungen. Gleicht man diese Laufzeitverzerrungen mittels eines mehrgliedrigen Laufzeitentzerrers einmal fest aus, so erhält man nur für diesen Fall eine weitgehend geebnete Laufzeitkurve, die anderen Kanalweichenfälle führen zu unterschiedlichen Schräglagen und Krümmungen der Laufzeitkurve.

Ein solcher Laufzeitentzerrer, wie er beispielsweise durch die DE-OS 2 039 417 bekannt ist, besteht zumeist aus mehreren Allpässen zweiter Ordnung, deren L- und C-Werte abgleichbar sind. Die Laufzeitverzerrungen, die einer nach oben geöffneten Parabel ähneln, können durch Abgleich der L- und C-Werte im Durchlassband des ZF-Signals bis auf einen vernachlässigbaren Restrippel eingeebnet werden, wobei eine der Anzahl der Entzerrerglieder entsprechende Anzahl von Spulen und Trimmern abgeglichen werden muss. Dieser Abgleich erfolgt zuerst in einem künstlichen Funkfeld. Werden die Richtfunkgeräte nun in ein echtes Funkfeld eingesetzt, so ergeben sich durch die Toleranzen der Kanalweichenfilter, durch Dispersion der Antennenhohlleiter und eventuell durch eine andere Zuordnung der Sender- und Empfängereinsätze oder bei Frequenzwechsel erneut Laufzeitverzerrungen, die in vielen Fällen hauptsächlich in einer Schräglage der Laufzeit bestehen. Um diese Schräglage zu beseitigen, muss nun in jedem Allpass der Abgleich von zumindest einer Spule oder einem Kondensator verändert werden, was einen erheblichen Aufwand erfordert.

Eine Vereinfachung ergibt sich durch Hinzufügen eines zusätzlichen Allpassgliedes mit sehr breiter Laufzeitcharakteristik zu dem Laufzeitentzerrer. Mit einem solchen Glied ist es bei entsprechender Dimensionierung möglich, geringe Schräglagen der Laufzeit nur durch Variation der Induktivität oder der Kapazität einzuebnen.

Durch die DE-PS 2 748 559 ist ein Laufzeitentzerrer der eingangs beschriebenen Art bekannt, bei dem Laufzeitschräglagen durch geringfügige Verstimmung von mehreren Allpässen, und zwar elektronisch mit Kapazitätsdioden ausgeglichen werden.

Der Erfindung liegt die Aufgabe zugrunde, für einen solchen Laufzeitentzerrer eine Lösung anzugeben, mit der Laufzeitverzerrungen bzw. Schräglagen auf einfache Weise und reproduzierbar entzerrt werden können.

Diese Aufgabe wird gemäss der Erfindung in der Weise gelöst, dass in der Zuleitung der Vorspannung an die Kapazitätsdioden ein allen Allpässen gemeinsamer n-stufiger Schalter mit einer oder mehreren Schaltbahnen und n getrennt einstellbare Spannungsteiler für jeden Allpass eingeschaltet sind und dass durch Umschalten des Schalters n verschieden grosse Vorspannungen für die Kapazitätsdiode in allen Allpässen einstellbar sind.

Durch die erfindungsgemässen Massnahmen wird erreicht, dass Schräglagen auf einfache Weise mit nur einem einzigen Stellglied auf günstige Werte reduziert werden können. Über den Schalter und die einzelnen Spannungsteiler ist es möglich, n voneinander unabhängige Laufzeiteinstellungen zu realisieren, die durch einfaches Umschalten des Schalters ausgewählt werden können.

Vorteilhafte Ausgestaltungen und Weiterbildungen des Erfindungsgegenstandes sind in den Unteransprüchen angegeben. Durch die Dioden zur Gleichspannungsentkopplung ergibt sich dabei der Vorteil, dass der Laufzeitentzerrer mit einem einfachen, einbahnigen Schalter realisiert wird.

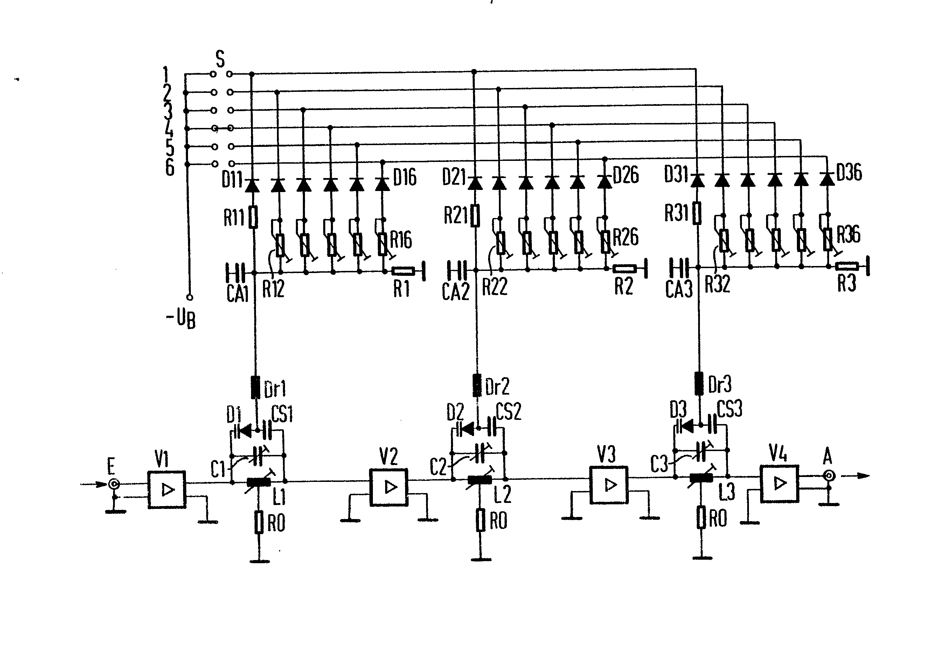

Nachstehend wird die Erfindung anhand eines in der Zeichnung dargestellten Ausführungsbeispiels näher erläutert.

In der Figur ist ein dreigliedriger aktiver Laufzeitentzerrer mit einstellbarem Laufzeitschrägleger in einem Prinzipschaltbild dargestellt. Zwischen dem Schaltungseingang E und dem Schaltungsausgang A sind vier Verstärker V1, V2, V3 und V4, beispielsweise Transistor-Trennverstärker, in Serie geschaltet. Zwischen den Verstärkern sind Allpässe zweiter Ordnung eingeschaltet. Diese Allpässe bestehen jeweils aus einem überbrückten T-Glied mit einem mittenangezapften Übertrager L1, L2, L3 im Längszweig, dessen einstellbare Hauptinduktivität durch eine ihn überbrückende einstellbare Kapazität C1, C2, C3 zu einem Parallel-Resonanzkreis ergänzt ist, und aus jeweils einem Widerstand $R_0$ im Querzweig. Parallel zur einstellbaren Kapazität C1, C2, C3 der Allpässe ist jeweils eine Serienschaltung eines Kondensators CS1, CS2, CS3 und einer Kapazitätsdiode D1, D2, D3 geschaltet. Über eine an den Verbindungspunkt der Serienkapazität mit der Kapazitätsdiode angeschlossene, entkoppelnde Drossel Dr1, Dr2, Dr3 gelangt die Vorspannung an die betreffenden Kapazitätsdioden.

Erfindungsgemäss sind in der Zuleitung der Vorspannung an die Kapazitätsdioden ein n-stufiger Schalter S (im Ausführungsbeispiel sechs Stufen) und n getrennte einstellbare Spannungsteiler für jeden Allpass eingeschaltet. Der Schalter S weist einen mit der Spannungsquelle $-U_B$ verbundenen Eingang und sechs Ausgänge auf, wobei die einzelnen Leitungspfade durch eine umschaltbare Kontaktbrücke durchschaltbar sind (beispielsweise in Stellung 4 des Schalters S in der Figur).

Die Stellung 1 des Schalters S ist die Grundeinstellung. Hierbei ist in der Zuleitung zu den betreffenden Allpässen jeweils ein Ohm'scher Widerstand R11, R21, R31 geschaltet, denen jeweils eine Diode D11, D21 bzw. D31 vorgeschaltet ist. Hier wird der Laufzeitenzerrer durch Einstellung der Induktivitäten L1, L2, L3 und Kapazitäten C1, C2, C3 der betreffenden Allpässe auf seine Grundstellung gebracht.

An den den Stellungen 2 bis 6 des Schalters S zugeordneten Ausgängen sind die Spannungsteiler für die Allpässe angeschlossen, wobei die Anfangsanschlüsse der Spannungsteiler gleicher Zuordnungszahl mit demselben Ausgangsanschluss des Schalters verbunden sind. Die Spannungsteiler bestehen jeweils aus Potentiometern R12 . . . R16, R22 . . . R26 und R32 . . . R36, von denen die zu einem Allpass gehörenden Potentiometer jeweils einseitig miteinander verbunden sind, sowie aus den Widerständen R1, R2 und R3, die jeweils am Verbindungspunkt der Potentiometer eines Allpasses diesen in Serie geschaltet nach Masse führen. Vom Verbindungspunkt der jeweiligen Potentiometer eines Allpasses mit dem Serienwiderstand R1, R2, R3 – auch der Widerstand R11, R21 bzw. R31 des zur Stellung des Schalters gehörenden Zweiges ist an diesem Punkt angeschlossen – führt die Leitungsverbindung über die jeweilige Drossel Dr1, Dr2 bzw. Dr3 an den Verbindungspunkt von Kapazitätsdiode D1, D2 bzw. D3 und weiterem kapazitivem Element CS1, CS2 bzw. CS3 des betreffenden Allpasses.

Den Potentiometern R12 . . . R16, R22 . . . R26 und R32 . . . R36 der Spannungsteiler ist, ebenso wie den Widerständen R11, R21 und R31 der in der Stellung 1 des Schalters S angeschlossenen Zweige, jeweils eine Diode D11 . . . D16, D21 . . . D26 und D31 . . . D36 vorgeschaltet. Durch Einfügen dieser Dioden ist eine Gleichspannungsentkopplung zwischen den Spannungsteilern möglich. Zur HF-mässigen Abblockung der Vorspannungszuführung ist jeweils ein Kondensator CA1, CA2, CA3 vorgesehen, die an den Mittenanschluss der Spannungsteiler angeschlossen sind.

Nach der Grundeinstellung des Laufzeitenzerrers über Stellung 1 des Schalters S werden in den Stellungen 2 bis 6 durch Variation der entsprechenden Potentiometer R12, R22, R32 bis R16, R26, R36 und dadurch Änderung der Kapazität der Kapazitätsdioden D1, D2, D3 unterschiedliche Festeinstellungen der Laufzeit realisiert, die durch Umschalten des Schalters S auswählbar und reproduzierbar sind.

Die zu den Kapazitätsdioden in Serie liegende Kapazität CS1, CS2, CS3 dient als Koppelkondensator und eventuell auch zur passenden Verkleinerung der Kapazitätsänderung, die durch die Kapazitätsdioden D1, S2, D3 bewirkt wird und parallel zur einstellbaren Kapazität C1, C2, C3 der Allpässe wirksam ist. Die Serienkondensatoren CS1, CS2, CS3 können auch durch Kapazitätsdioden, die durch die Vorspannung in Sperrichtung betrieben werden, ersetzt werden.

## Patentansprüche

1. Laufzeitentzerrer für Geräte der elektrischen Nachrichtentechnik, dessen Laufzeitabhängigkeit von der Frequenz einstellbar ist, bestehend aus zwischen jeweils zwei Verstärkerstufen (V1, V2, V3, V4) einschaltbaren Allpässen aus wenigstens einem überbrückten T-Glied mit einem mittenangezapften Übertrager (L1, L2, L3) im Längszweig, dessen einstellbare Hauptinduktivität durch eine ihn überbrückende einstellbare Kapazität (C1, C2, C3) zu einem Parallelresonanzkreis ergänzt ist, parallel zu der die Serienschaltung aus einer Kapazitätsdiode (D1, D2, D3) und einem weiteren kapazitiven Element (CS1, CS2, CS3) geschaltet ist, dadurch gekennzeichnet, dass in der Zuleitung der Vorspannung an die Kapazitätsdioden (D1, D2, D3) ein allen Allpässen gemeinsamer n-stufiger Schalter (S) mit einer oder mehreren Schaltbahnen und n getrennt einstellbare Spannungsteiler (R1, R12 . . . R16; R2, R22 . . . R26; R3, R32 . . . R36) für jeden Allpass eingeschaltet sind und dass durch Umschalten des Schalters (S) n verschieden grosse Vorspannungen für die Kapazitätsdiode (D1, D2, D3) in allen Allpässen einstellbar sind.

2. Laufzeitentzerrer nach Anspruch 1, dadurch gekennzeichnet, dass die n getrennt einstellbaren Spannungsteiler (R1, R12 . . . R16; R2, R22 . . . R26; R3, R32 . . . R36) aus je einem als variabler Widerstand geschalteten Potentiometer (R12 . . . R16; R22 . . . R26; R32 . . . R36) bestehen, die auf einen gemeinsamen Verbindungspunkt geschaltet sind, von dem einerseits ein Widerstand (R1, R2, R3) nach Masse führt und von dem andererseits die Vorspannung über eine HF-entkoppelnde Drossel (Dr1, Dr2, Dr3) zur Kapazitätsdiode (D1, D2; D3) geleitet wird.

3. Laufzeitentzerrer nach Anspruch 1 oder 2, dadurch gekennzeichnet, dass der n-stufige Schalter (S) eingangsseitig an der Vorspannungsquelle (−$U_B$ liegt und ausgangsseitig mit dem freien Ende der n getrennt einstellbaren Spannungsteiler (R1, R12 . . . R16; R2, R22 . . . R26; R3, R32 . . . R36) für jeden Allpass verbunden ist.

4. Laufzeitentzerrer nach Anspruch 3, dadurch gekennzeichnet, dass das freie Ende der n getrennt einstellbaren Spannungsteiler (R1, R12 . . . R16; R2, R22 . . . R26; R3, R32 . . . R36) jeweils gleicher Zuordnungszahl für alle Allpässe mit demselben Ausgangsanschluss des n-stufigen Schalters (S) verbunden ist.

5. Laufzeitentzerrer nach einem der vorhergehenden Ansprüche, dadurch gekennzeichnet, dass in den Eingängen der Spannungsteiler (R1, R12 . . . R16; R2, R22 . . . R26; R3, R32 . . . R36) Dioden (D11 . . . D16; D21 . . . D26; D31 . . . D36) zur Gleichspannungsentkopplung in Serie geschaltet sind.

## Claims

1. A delay equalizer for electrical communications apparatus, whose delay is dependent upon frequency and is adjustable, consisting of all-pass filters which can be respectively switched between two amplifiers (V1, V2, V3, V4) and consist of at least one bridged T-element having a centrally tapped transformer (L1, L2, L3) in the series arm, whose adjustable main inductance is complemented to form a parallel resonant circuit by an adjustable capacitance (C1, C2, C3) bridging said series arm, to which capacitance the series combination of a capacitance diode (D1, D2, D3) and a further capacitive element (CS1, CS2, CS3) is connected in parallel, characterised in that an n-stage switch (S) common to all all-pass filters is inserted in the supply line of the bias to the capacitance diodes (D1, D2, D3) and has one or more switching paths and n separately adjustable voltage dividers (R1, R12 to T16; R2, R22 to R26; R3, R32 to R36) for each all-pass filter, and that by changing over the switch (S) n different bias voltages for the capacitance diodes (D1, D2, D3) are adjustable in all all-pass filters.

2. A delay equalizer as claimed in Claim 1, characterised in that the n separately adjustable voltage dividers (R1, R12 to R16; R2, R22 to R26; R3, R32 to R36) respectively consists of a potentiometer (R12 to R16; R22 to R26; R32 to R36) switched as a variable resistor, which potentiometers are connected to a common connection point, from which a resistor (R1, R2, R3) leads to earth, and from which the bias voltage is led to the respective capacitance diodes (D1, D2, D3) via an HF-decoupling choke (Dr1, Dr2, Dr3).

3. A delay equalizer as claimed in Claim 1 or 2, characterised in that the n-stage switch (S) has its input connected to the bias voltage source ($-U_B$) and its output to the free end of the n separately adjustable voltage dividers (R1, R12 to R16; R2, R22 to R26; R3, R32 to R36) for each all-pass filter.

4. A delay equalizer as claimed in Claim 3, characterised in that the exposed end of the n separately adjustable voltage dividers (R1, R12 to R16; R2, R22 to R26; R3, R32 to R36) of the same assignment number for all all-pass filters is connected to the same output terminal of the n-stage switch (S).

5. A delay equalizer as claimed in one of the preceding Claims, characterised in that diodes (D11 to D16; D21 to D26; D31 to D36) are series-connected for direct voltage decoupling in the inputs of the voltage dividers (R1, R12 to R16; R2, R22 to R26; R3, R32 to R36).

## Revendications

1. Correcteur de temps de propagation pour des appareils de la technique électrique des communications, dont la dépendance du temps de transit vis-à-vis de la fréquence est réglable et qui est constitué par des filtres passe-tout pouvant être branchés entre deux étages amplificateurs respectifs (V1, V2, V3, V4) constitués par au moins un circuit en T ponté comportant un transformateur (L1, L2, L3) à prise médiane, situé dans la branche longitudinale et dont l'inductance principale réglable est complétée par une capacité réglable (C1, C2, C3) shuntant cette inductance en formant un circuit résonnant parallèle, en parallèle avec lequel se trouve branché un circuit série formé par une diode à capacité (D1, D2, D3) et un autre élément capacitif (CS1, CS2, CS3), caractérisé par le fait que dans la ligne d'application de la tension de polarisation aux diodes à capacité (D1, D2, D3) se trouvent branchés un commutateur (S) à n échelons, commun à tous les filtres passe-tout et comportant une ou plusieurs voies de commutation, et n diviseurs de tension réglable (R1, R12...R16; R2, R22...R26; R3, R32...R36) pour chaque filtre passe-tout et que n tensions de polarisation possédant des valeurs différentes pour les diodes à capacité (D1, D2, D3) sont réglables dans tous les filtres passe-tout par commutation du commutateur (S).

2. Correcteur de temps de propagation suivant la revendication 1, caractérisé par le fait que les n diviseurs de tension réglables séparément (R1, R12...R16; R2, R22...R26; R3, R32...R36) sont constitués par des potentiomètres respectifs (R12...R16; R22...R26; R32...R36) branchés en tant que résistance variables et qui sont raccordés à un point commun de jonction, à partir duquel d'une part une résistance (R1, R2, R3) est raccordée à la masse et à partir duquel d'autre part la tension de polarisation est envoyée à la diode à capacité (D1, D2, D3) par l'intermédiaire d'une bobine d'arrêt (Dr1, Dr2, Dr3) réalisant un découplage des hautes fréquences.

3. Correcteur de temps de propagation suivant la revendication 1 ou 2, caractérisé par le fait que le commutateur (S) à n étages est raccordé, côté entrée, à la source de tension de polarisation ($-U_B$) et, du côté sortie, à l'extrémité libre des n diviseurs de tension réglables séparément (R1, R12...R16; R2, R22...R26; R3, R32...R36) pour chaque filtre passe-tout.

4. Correcteur de temps de propagation suivant la revendication 3, caractérisé par le fait que l'extrémité libre des n diviseurs de tension réglables séparément (R1, R12...R16; R2, R22...R26; R3, R32...R36) est reliée, respectivement, avec le même rang d'association pour tous les filtres passe-tout, à la même borne de sortie du commutateur (S) à n échelons.

5. Correcteur de temps de propagation suivant l'une des revendications précédentes, caractérisé par le fait que des diodes (D11...D16; D21...D26; D31...D36) servant à réaliser le découplage de la tension continue sont branchées en série avec les entrées des diviseurs de tension (R1, R12...R16; R2, R22...R26; R3, R32...R36).